# EUROPEAN PATENT SPECIFICATION

(11) **EP 2 586 027 B1**
(45) Date of publication and mention of the grant of the patent: **22.07.2015**
(21) Application number: 11731590.3
(22) Date of filing: 24.06.2011
(51) Int. Cl.: G11B 7/252, G11B 7/003

(54) **LOW VISCOSITY MONOMERS FOR PATTERNING OPTICAL RECORDING TAPES**
NIEDRIG VISKOSE MONOMERE FÜR STRUKTURIERTE OPTISCHE AUFZEICHNUNGSBÄNDER
MONOMERE À BASSE VISCOSITÉ POUR BANDES OPTIQUES& xA;D'ENREGISTREMENT STRUCTURÉES

(30) Priority: 24.06.2010 US 822592
(43) Date of publication of application: 01.05.2013
(73) Proprietor: Oracle International Corporation, Redwood City, CA 94065 (US)
(72) Inventor: KIM, Eui Kyoon, Woburn Massachusetts 01801 (US)
(74) Representative: Davies, Simon Robert
(86) International application number: PCT/US2011/041737
(87) International publication number: WO 2011/163543

(56) References cited:
- EP-A1- 0 519 629
- ANDREW J. STRANDJORD: "Flexible storage medium for write-once optical tape", PROCEEDINGS OF SPIE, vol. 1663, 1 January 1992 (1992-01-01), pages 362-371, XP55005325, ISSN: 0277-786X, DOI: 10.1117/12.137567

## Description

### BACKGROUND

### 1. Field

The present invention relates to optical tape storage technology and in particular to methods for making optical tape.

### 2. Description of the Related Art

The ever expanding amount of digital data provides an impetus for the continuing development of high capacity storage solutions. Technologies that are suitable for these applications include optical tape, magnetic tape, and optical disks. Of these possibilities, optical tape technology is believed to provide the greater storage capacity.

The typical optical tape medium includes a base film such as polyethylene naphthalate (PEN) over-coated with multiple layers for recording digital data. A polymeric imprint layer is usually disposed over the base film. In one type of optical tape, the imprint layer is over-coated with a reflective metallic layer that is, in turn, over-coated with a sequence of dielectric layer, phase change layer, and dielectric layer. The actual data recording and reading occurs in the phase change layer. In a typical application, a pulsed laser beam is projected from an optical head assembly onto the optical tape thereby causing a phase change in the phase change layer that results in data being encoded therein. Data encoded onto the optical tape is also read with a laser with the reflective layer reflecting light to a detector. Moreover, optical tape usually includes optical servo marks embossed into the imprint layer along the length of the tape for operating with a servo control system for controlling the optical head, Although the current optical tape technology works reasonably well, there are a number of problems related to the polymeric imprint layer.

The imprint layers tend to cause a number of detrimental effects due to dimensional changes that occur therein. For example, such dimensional changes may cause thickness variations in the metal and dielectric layers. Although these effects are believed to be due to poor mechanical and thermal properties of the imprint polymer, it is also thought that the sensitivity of the imprint layer to electron beam damage during the metal layer and dielectric layer depositions also contributes to these changes.

Accordingly, there is a need for new materials and methods for forming the imprint layer used in optical tape media.

### SUMMARY OF THE INVENTION

The present invention solves one or more problems of the prior art by providing, in at least one embodiment, a method for forming an optical tape for data storage from a substrate film. The method of the present embodiment includes a step of patterning a curable liquid composition onto the substrate film. The curable liquid composition comprises a free radical photoinitiator and a polymerizable component that includes at least one acrylate. The curable liquid composition coated on the substrate film is illuminated with actinic radiation to form a patterned imprint layer disposed over the substrate film. A multilayer data recording assembly is placed over the second imprint layer side to form the optical tape. Advantageously, the imprint layer formed in the present embodiment is less susceptible to electron beam damage and has improved mechanical stability as compared to the imprint layers currently used to fabricate optical tape medium.

In another embodiment, a method for forming an optical tape for data storage from a substrate film is provided. Characteristically, the substrate film includes a first substrate side and a second substrate side. The method of the present embodiment includes a step of patterning a curable liquid composition onto the substrate film. The curable liquid composition comprises a free radical photoinitiator and a polymerizable component that includes at least one acrylate. The curable liquid composition coated on the substrate film is illuminated with actinic radiation (e.g., UV radiation) to form a patterned imprint layer disposed over the substrate film. A metal layer is deposited over the patterned imprint layer. A first dielectric layer is then deposited onto the metal layer. A phase change layer is then coated onto the first dielectric layer. Finally, a second dielectric layer is deposited onto the phase change layer.

In still another embodiment, an imprint layer formed by the methods set forth above is provided. The imprint layer includes the residues of a free radical photoinitiator and of a polymerizable component (e.g., monomer) that includes at least one acrylate. The imprint layer optionally further comprises the residues of a free radical photoinitiator.

### BRIEF DESCRIPTION OF THE DRAWINGS

Exemplary embodiments of the present invention will become more fully understood from the detailed description and the accompanying drawing, wherein:
Figure 1 is a top view of an optical tape medium incorporating an embodiment of an imprint layer;
Figure 2 is a cross sectional view of an optical tape medium incorporating an embodiment of an imprint layer; and
Figure 3 is a schema illustration of a system for forming an optical tape medium.

### DETAILED DESCRIPTION OF THE INVENTION

Reference will now be made in detail to presently preferred compositions, embodiments and methods of the present invention, which constitute the best modes of practicing the invention presently known to the inventors. The Figures are not necessarily to scale. However, it is to be understood that the disclosed embodiments are merely exemplary of the invention that may be embodied in various and alternative forms. Therefore, specific details disclosed herein are not to be interpreted as limiting, but merely as a representative basis for any aspect of the invention and/or as a representative basis for teaching one skilled in the art to variously employ the present invention.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation; and, unless expressly stated to the contrary, measurement of a property is determined by the same technique as previously or later referenced for the same property.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

It must also be noted that, as used in the specification and the appended claims, the singular form "a," "an," and "the" comprise plural referents unless the context clearly indicates otherwise. For example, reference to a component in the singular is intended to comprise a plurality of components.

Throughout this application, where publications are referenced, the disclosures of these publications in their entireties are hereby incorporated by reference into this application to more fully describe the state of the art to which this invention pertains.

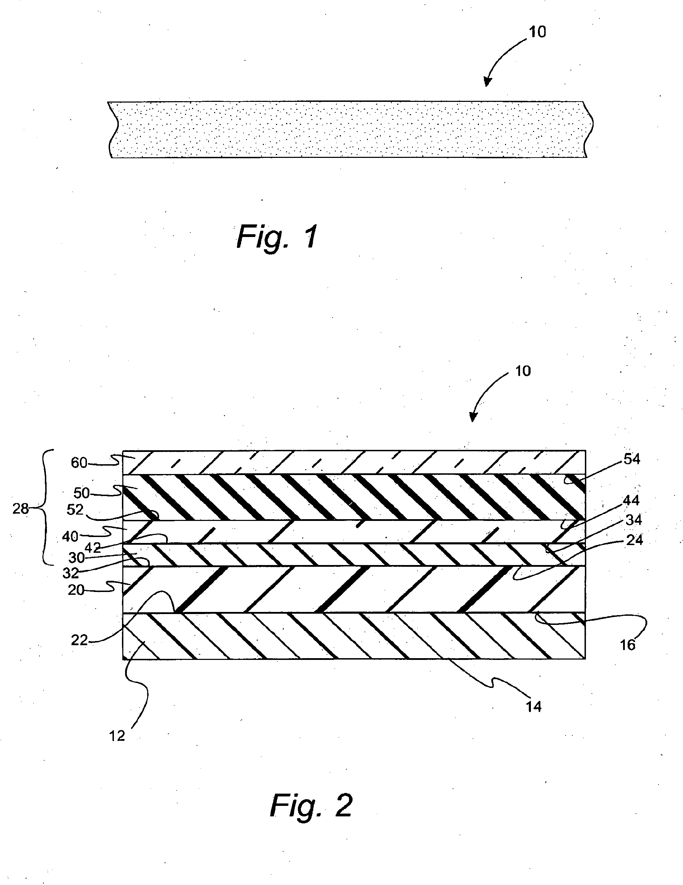

With reference to Figures 1 and 2, schematic illustrations of an optical tape medium for storing digital data are provided. Figure 1 is a top view of the optical tape medium. Figure 2 is a cross sectional view of the optical tape medium. Optical tape 10 includes substrate film 12 having substrate film sides 14, 16. Typically, substrate film 12 is formed from polyethylene naphthalate (PEN). Imprint layer 20 is disposed over substrate film side 16. Imprint layer 20 includes imprint layer side 22 and imprint layer side 24 with imprint layer side 22 being more proximate to substrate film 12. Advantageously, imprint layer 20 is made by the process set forth below. Multilayer data recording assembly 28 is disposed over imprint layer 20. Multilayer data recording assembly 28 typically includes one or more layers involved in the optical recording of data.

Still referring to Figures 1 and 2, an example of multilayer data recording assembly 28 is provided. Multilayer data recording assembly 28 includes metal layer 30 disposed over imprint layer side 24. Metal layer 30 includes metal layer side 32 and metal layer side 34. Metal layer side 32 is more proximate to imprint layer 20 than metal layer side 34. Multilayer data recording assembly 28 also includes dielectric layer 40 disposed over metal layer side 34. Dielectric layer 40 includes dielectric layer side 42 and dielectric layer side 44 which is more proximate to metal layer 30. Multilayer data recording assembly 28 further includes phase change layer 50 which is disposed over dielectric layer 40. Phase change layer 50 includes phase change layer side 52 and phase change layer side 54 which is more proximate to phase change layer 50. Finally, the present embodiment also includes multilayer data recording assembly 28. Multilayer data recording assembly 28 also includes dielectric layer 60 disposed over metal layer side 54.

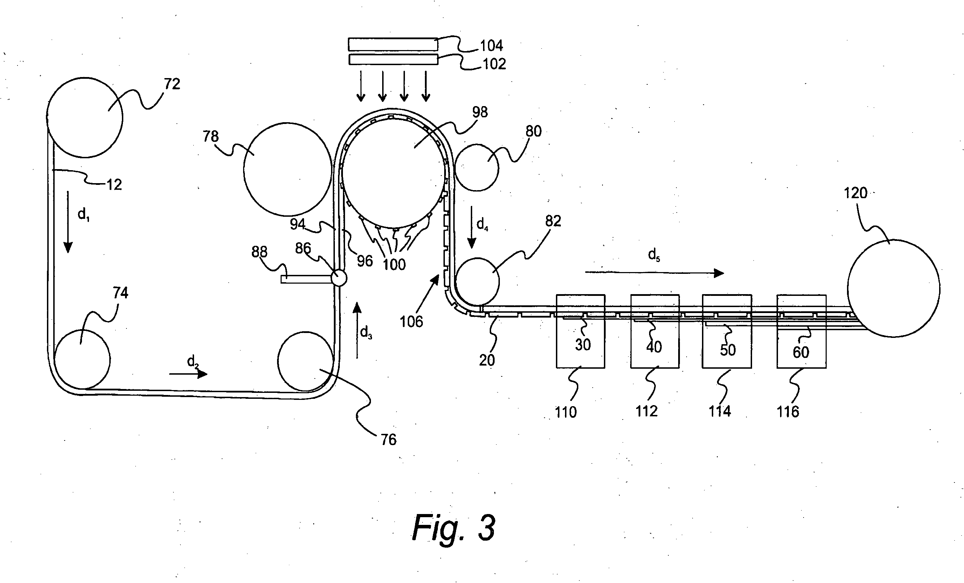

With reference to Figure 3, a schematic diagram illustrating the fabrication of the optical storage medium set forth above is provided. Optical tape-forming system 70 includes spool 72 which supplies substrate film 16 which is of a tape-like configuration. During operation of optical tape-forming system 70, substrate film 12 moves in the directions indicated by d₁-d₅ and is guided by direction rollers 74-82. Substrate film side 16 of substrate film 12 is coated with a curable liquid composition 86 from dispenser 88. In a refinement, curable liquid composition 86 includes free radical photoinitiator and a polymerizable component that includes at least one acrylate. In the variation depicted in Figure 3, dispenser 88 is used to coat curable liquid composition 86 onto substrate film 12. Coated substrate film 94 includes curable liquid layer 96 disposed on substrate film 12. Coated substrate film 94 proceeds to patterning roller 98. Patterning roller 98 includes protrusions 100 that define the pattern to be imprinted upon coated substrate film 94. Curing energy source 102 directs actinic radiation onto curable liquid layer 96 to induce radical polymerization therein to form imprint layer 20. Typically, curing energy source 102 is an ultraviolet ("UV") light source. Heat source 104 is optionally present in order to provide heat to assist in the curing. After curing, imprint layer 20 has pattern 106 imprinted therein

Still referring to Figure 3, multilayer data recording assembly 28 is fabricated along direction ds. In a variation, metal deposition station 110 is used to deposit metal layer 30 over imprint layer 20. Examples of deposition processes that may be used include sputtering and evaporation. Typically, metal deposition 110 is a sputtering reactor. Substrate film 12 proceeds next to dielectric deposition station 112 to form dielectric layer 40. Phase change layer 50 is coated onto dielectric layer 40 at phase change coating system 114. Typically, phase change layer 50 is a metal alloy, which has significant optical and electrical differences between the amorphous and crystalline states. Dielectric layer 60 is deposited onto phase change layer 50 via dielectric deposition station 116. It should be appreciated that metal layer 30, dielectric layers 40, 60 and phase change layer 50 can be single or multilayer structures. For example, some layers use two or three sub-layers to provide better reflection control and long term stability. Finally, optical tape 10 is rolled onto spool 120. Advantageously, the optical tape formed by the present method is observed to have superior mechanical and thermal properties. In particular, the method allows for the imprint layer to be formed with a thickness less than about 2 microns. In another refinement, the imprint layer has a thickness less than about 1.5 microns. In still another refinement, the imprint layer has a thickness greater than from about 0.1 to about 0.5 microns. In yet another variation, the imprint layer has a thickness greater than about 0.2 microns. In yet another variation, the imprint layer has a thickness between 0.3 and 0.4 microns. In still other variations, the imprint layer has a thickness from about 0.1 to about 0.25 microns.

In some variations, the optical tape processing is paused after formation of the imprint layer. In this variation, the coated substrate may be rolled onto a spool for later processing. In other variations, the optical tape may be subjected to a slitting process in order to fit in a cartridge.

As set forth above, various embodiments of the present invention advantageously utilize a curable liquid composition that is radically polymerized. Advantageously, the curable, liquid composition has a viscosity less than about 50 cps at 25° C. In another refinement, the curable liquid composition has a viscosity less than about 30 cps at 25° C. In another refinement, the curable liquid composition has a viscosity less than about 20 cps at 25° C. In another refinement, the curable liquid composition has a viscosity less than about 10 cps at 25° C. Typically, the curable liquid composition has a viscosity greater than about 2 cps at 25° C. In another refinement, the curable liquid composition has a viscosity greater than about 5 cps at 25° C. The curable liquid composition includes one or more acrylates. Examples of suitable acrylates include monoacrylates, diacrylates, higher order functionality acrylates, and combinations thereof. In a refinement, the polymerizable comportent(s) are present in an amount from about 90 to about 99 weight percent of the total weight of the curable liquid composition. In another refinement, the polymerizable component(s) are present in an amount from about 93 to about 99 weight percent of the total weight of the curable liquid composition. In still another refinement, the polymerizable component(s) are present in an amount from about 95 to about 99 weight percent of the total weight of the curable liquid composition.

In a variation, the curable liquid composition includes an acrylate having formula I: 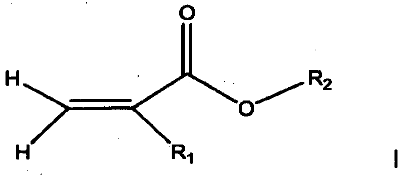 wherein R₁ is hydrogen or substituted or unsubstituted alkyl; and R₂ is a substituted or unsubstituted alkyl having more than 3 carbon atoms, cycloalkyl, cycloalkenyl, or substituted or unsubstituted aryl. Preferably R₁ is hydrogen or methyl; and R₂ is n-butyl, t-butyl, isobornyl, phenyl, benzyl, dicylcopentenyl, dicyclopentenyl oxyethyl, ethylene glycol dicyclopentyl ether, cyclohexyl, and naphthyl. The most preferred ethyleneically unsaturated monomers are isobornyl acrylate monomers. A particularly useful monomer is provided by the following formula:

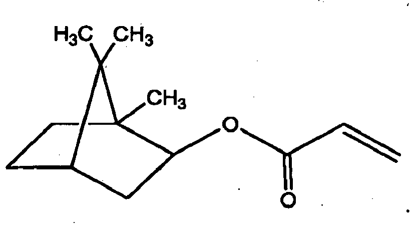

In a further refinement, the curable liquid composition also includes compounds having formula II: 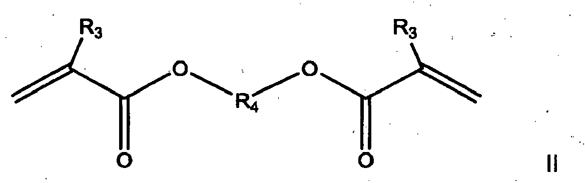 wherein R₃ is hydrogen or substituted or unsubstituted alkyl (e.g., methyl, ethyl, etc) and R₄ is a hydrocarbon moiety. In a refinement, R₄ is an alkylene group. In a further refinement, R₄ is describe by -(CH₂)ₙ-, where n is an integer from 1 to 10. In a particularly useful variation, the compound having formula II has the following formula:

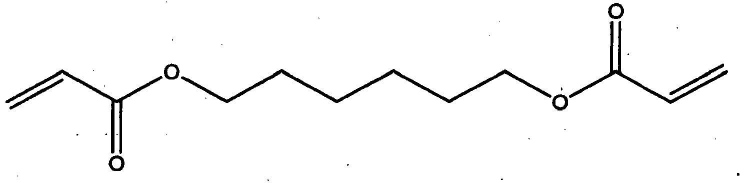

In a particularly useful variation, the curable liquid composition includes a combination of the compound having formula 1 and the acrylate having formula II. In a refinement of this variation, the acrylate having formula I is present in an amount from about 55 weight percent to about 75 weight percent of the total weight of the curable liquid composition and the acrylate having formula II is present in an amount from about 25 weight percent to about 45 weight percent of the total weight of the curable liquid composition.

The curable liquid composition further includes a free radical photoinitiator. Suitable free radical photoinitiators include, but are not limited to, benzophenones, acetophenone derivatives, and combinations thereof. Specific examples include, alpha-hydroxyalkylphenylketones, benzoins (e.g., benzoin alkyl ethers and benzyl ketals), monoacylphosphine oxides, bisacylphosphine oxides, and combinations thereof. A particularly useful photoinitiator is Bis(2,4,6-trimethylbenzoyl)-phenylphosphineoxide. In a refinement, the free radical photoinitiatior is present in an amount from about 0.1 to about 10 weight percent of the total weight of the curable liquid composition. In another refinement, the free radical photoinitiatior is present in an amount from about 0.5 to about 8 weight percent of the total weight of the curable liquid composition. In still another refinement, the free radical photoinitiatior is present in an amount from about 1 to about 5 weight percent of the total weight of the curable liquid composition.

The various methods of the present invention are used to form a polymeric imprint layer as set forth above. Therefore, the imprint layer is characterized by including residues of one or more of the acrylates set forth above. In particular, the imprint layer includes residues of the compounds describe by Formula I and II. The imprint layer also includes residues of the free radical photoinitiator(s)set forth above.

A polymeric imprint layer is made by coating a mixture having about 66 weight percent Isobornyl acrylate, 30 weight percent 1,6-Hexanediol diacrylate, and 4 weight percent Bis(2,4,6-trimethylbenzoyl)-phenylphosphineoxide onto a substrate film. The coated substrate film to then cured with UV light while passing over a patterning roller to form the imprint layer.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

Further embodiments of the invention are defined in the following numbered clauses:
1. A method for forming an optical tape for data storage from a substrate film, the substrate film having a first substrate side and a second substrate side, the method comprising:
   a) patterning a curable liquid composition onto the second side of the substrate film, the curable liquid composition comprising a radical photoinitiator and a polymerizable component comprising at least one acrylate;
   b) illuminating the curable liquid composition to form a patterned imprint layer disposed over the substrate film, the imprint layer having a first imprint layer side and a second imprint layer side, the first imprint layer side being more proximate to the second substrate side than the second imprint layer side; and
   c) placing a multilayer data recording assembly over the second imprint layer side.
2. The method of clause 1 wherein the curable liquid composition includes an acrylate having formula I: 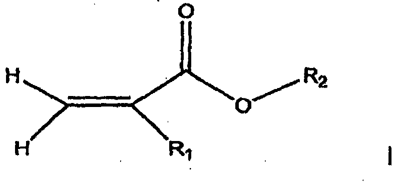 wherein R₁ is hydrogen or substituted or unsubstituted alkyl; and R₂ is a substituted or unsubstituted alkyl having more than 3 carbon atoms, cycloalkyl, cycloalkenyl, or substituted or unsubstituted aryl.
3. The method of clause 2 wherein R₁ is hydrogen or methyl.
4. The method of clause 2 wherein R₂ is n-butyl, t-butyl, isobornyl, phenyl, benzyl, dicylcopentenyl, dicyclopentenyl oxyethyl, ethylene glycol dicyclopentyl ether, cyclohexyl, and naphthyl.
5. The method of clause 1 wherein the curable liquid composition include a compound having the following formula: 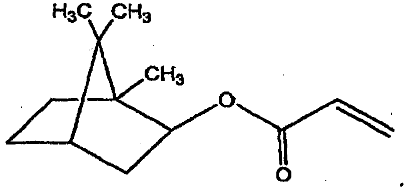
6. The method of clause 1 wherein the curable liquid composition includes a compound having the following formula II: 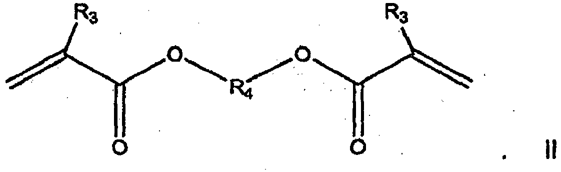 wherein R₃ is hydrogen or substituted or unsubstituted alkyl and R₄ is a hydrocarbon moiety.
7. The method of clause 3 wherein R₃ is hydrogen or methyl.
8. The method of clause 3 wherein R₄ is an alkylene group.
9. The method of clause 3 wherein R₄ is described by -(CH₂)ₙ- and n is an integer from 1 to 10.
10. The method of cause 1 wherein the at least one acrylate has the following formule: 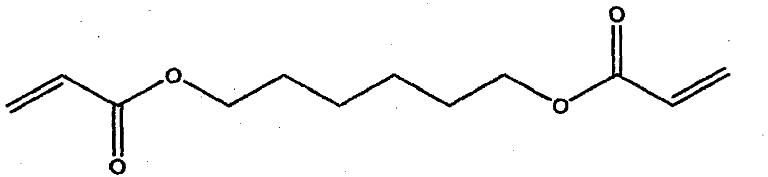
11. The method of clause 1 wherein step c) comprises
   d) depositing a metallic layer over the second imprint layer side;
   e) depositing a dielectric layer over the metallic layer;
   f) depositing a phase change layer over the first dielectric layer; and
   g) depositing a second dielectric-tajrer over the phase change layer.
12. The method of cause 1 wherein the curable liquid composition is illuminated with ultraviolet light.
13. The method of clause 1 wherein the curable liquid composition is patterned onto the second substrate side by:
   applying the curable liquid composition to the second substrate side to form a coated substrate; and
   contacting the curable liquid composition on the coated substrate with an imprinter such that a curable liquid composition is patterned.
14. A method for forming an optical tape for data storage from a substrate film, the substrate film having a first substrate side and a second substrate side, the method comprising:
   a) patterning a curable liquid composition onto the second side of the substrate film by:
      applying the curable liquid composition to the second substrate side to form a coated substrate; and
      contacting the curable liquid composition on the coated substrate with an
      imprinter such that a curable liquid composition is patterned;
         the curable liquid composition including a free radical photoinitiator and a polymerizable component including a compound having formula I and a compounds having formula II: 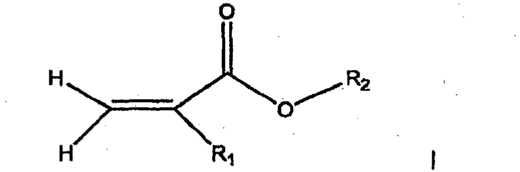 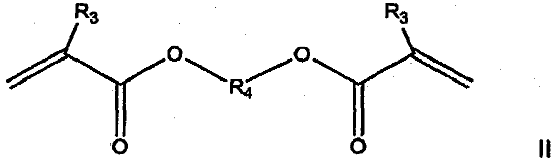
      wherein:
         R₁ is hydrogen or substituted or unsubstituted alkyl;
         R₂ is a substituted or unsubstituted alkyl having more than 3 carbon atoms, cycloalkyl, cycloalkenyl, or substituted or unsubstituted aryl;
         R₃ is hydrogen or substituted or unsubstituted alkyl; and
         R₄ is a hydrocarbon moiety;
   b) illuminating the curable liquid composition to form a patterned imprint layer disposed over the substrate film, the imprint layer having a first imprint layer side and a second imprint layer side, the first imprint layer side being more proximate to the second substrate side than the second imprint layer side;
   c) placing a multilayer data recording assembly over the second imprint layer side;
   d) depositing a metallic layer over the second imprint layer side;
   e) depositing a dielectric layer over the metallic layer;
   f) depositing a phase change layer over the first dielectric layer; and
   g) depositing a second dielectric layer over the phase change layer.
15. The method of clause 14 wherein the metallic layer is deposited by sputtering.
16. The method of clause 14 wherein:
   R₁ is hydrogen or methyl;
   R2 is Isobornyl, phenyl, benzyl, dicylcopentenyl, dicyclopentenyl oxyethyl, ethylene glycol dicyclopentyl ether, cyclohexyl, and naphthyl;
   R₃ is hydrogen or methyl; and
   R₄ is an alkylene group.
17. The method of clause 14 wherein the curable liquid composition includes a compound having the following formula: 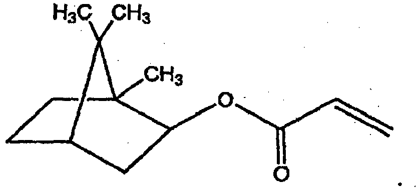
18. The method of clause 3 wherein R₄ is described by -(CH2)ₙ- and n is an integer from 1 to 10.
19. The method of clause 1 wherein the at least one acrylate has the following formula: 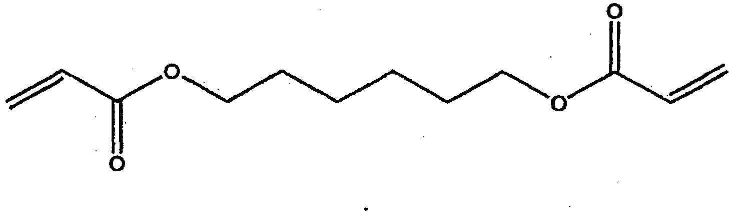
20. A polymeric imprint layer comprising residues of a free radical photoinitiator and a polymerizable component including a compound halving formula I and a compound having formula II: 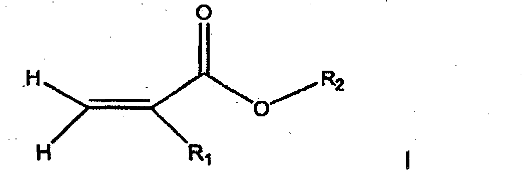 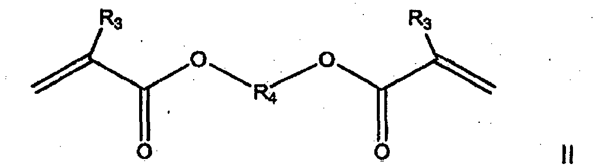 wherein:
   R₁ is hydrogen or substituted or unsubstituted alkyl;
   R₂ is a substituted or unsubstituted alkyl having more than 3 carbon atoms, cycloalkyl, cycloalkenyl, or substituted or unsubstituted aryl;
   R₃ is hydrogen or substituted or unsubstituted alkyl; and
   R₄ is a hydrocarbon moiety.

## Claims

1. A method for forming an optical tape for data storage from a substrate film, the substrate film having a first substrate side and a second substrate side, the method comprising:
a) patterning a curable liquid composition onto the second side of the substrate film, the curable liquid composition comprising a radical photoinitiator and a polymerizable component comprising at least one acrylate;
b) illuminatirig the curable liquid composition to form a patterned imprint layer disposed over the substrate film, the imprint layer having a first imprint layer side and a second imprint layer side, the first imprint layer side being more proximate to the second substrate side than the second imprint layer side; and
c) placing a multilayer data recording assembly over the second imprint layer side.

2. The method of claim 1 wherein the curable liquid composition includes an acrylate having formula I: 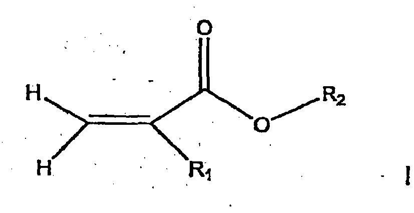 wherein R₁ is hydrogen or substituted or unsubstituted alkyl; and R₂ is a substituted or unsubstituted alkyl having more than 3 carbon atoms, cycloalkyl, cycloalkenyl, or substituted or unsubstituted aryl.

3. The method of claim 2 wherein R₁ is hydrogen or methyl.

4. The method of claim 2 wherein R₂ is n-butyl, t-butyl, isobornyl, phenyl, benzyl, dicylcopentenyl, dicyclopentenyl oxyethyl, ethylene glycol dicyclopentyl ether, cyclohexyl, and naphthyl.

5. The method of claim 1 wherein the curable liquid composition includes a compound having the following formula II: 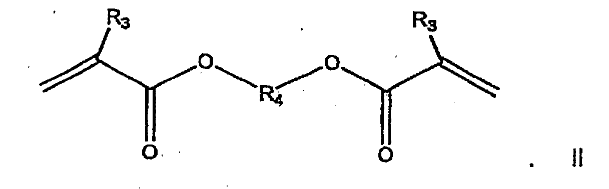 wherein R₃ is hydrogen or substituted or unsubstituted alkyl and R₄ is a hydrocarbon moiety.

6. The method of claim 5 wherein R₃ is hydrogen or Methyl.

7. The method of claim 5 wherein R₄ is an alkylene group.

8. The method of claim 1 wherein step c) comprises
d) depositing a metallic layer over the second imprint layer side;
e) depositing a dielectric layer over the metallic layer;
f) depositing a phase change layer over the first dielectric layer; and
g) depositing a second dielectric layer over the phase change layer.

9. The method of claim 1 wherein the curable liquid composition is patterned onto the second substrate side by:
applying the curable liquid composition to the second substrate side to form a coated substrate; and
contacting the curable liquid composition on the coated substrate with an imprinter such that a curable liquid composition is patterned.

10. A method for forming an optical tape for data storage from a substrate film, the substrate film having a first substrate side and a second substrate side, the method comprising:
a) patterning a curable liquid composition onto the second side of the substrate film by:
applying the curable liquid composition to the second substrate side to form a coated substrate; and
contacting the curable liquid composition on the coated substrate with an
imprinter such that a curable liquid composition is patterned;
the curable liquid composition including a free radical photoinitiator and a polymerizable component including a compound having formula I and a compound having formula II: 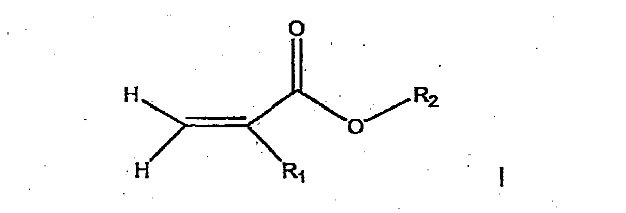 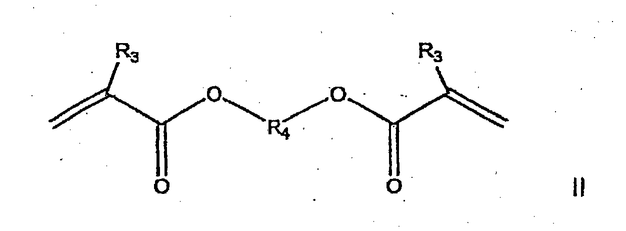
wherein:
R₁ is hydrogen or substituted or unsubstituted alkyl;
- R₂ is a substituted or unsubstituted alkyl having more than 3 carbon atoms, cycloalkyl, cycloaikenyl, or substituted or unsubstituted aryl;
R₃ is hydrogen or substituted or unsubstituted alkyl; and
R₄ is a hydrocarbon moiety;
b) illuminating the curable liquid composition to form a patterned imprint layer disposed over the substrate film, the imprint layer having a frst imprint layer side and a second imprint layer side, the first imprint layer side being more proximate to the second substrate side than the second imprint layer side;
c) placing a multilayer data recording assembly over the second imprint layer side;
d) depositing a metallic layer over the second imprint layer side;
e) depositing a dielectric layer over the metallic layer;
f) depositing a phase change layer over the first dielectric layer; and
g) depositing a second dielectric layer over the phase change layer.

11. The method of claim 10 wherein:
R₁ is hydrogen or methyl;
R₂ is isobornyl, phenyl, benzyl, dicylcopentenyl, dicyclopentenyl oxyethyl, ethylene glycol dicyclopentyl ether, cyclohexyl, and naphthyl;
R₃ is hydrogen or methyl; and
R₄ is an alkylene group.

12. The method of claim 5 or 10 wherein the curable liquid composition includes a compound having the following formula:

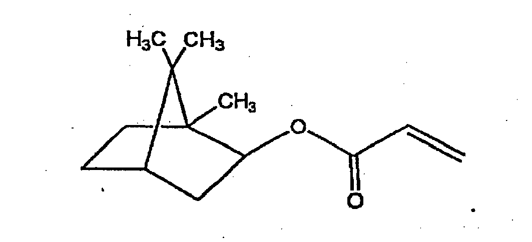

13. The method of claim 5 or 11 wherein R₄ is described by -(CH₂)ₙ- and n is an integer from 1 to 10.

14. The method of claim 1 our 10 wherein the at least one acrylate has the following formula:

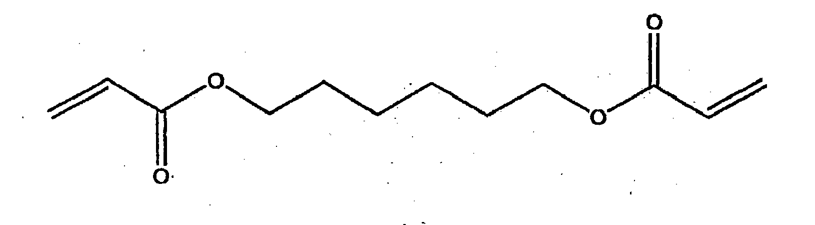

15. An optical tape for data storage comprising a substrate with a patterned polymeric imprint layer comprising residues of a free radical photoinitiator and a polymerizable component including a compound having formula I and a compound having formula II: 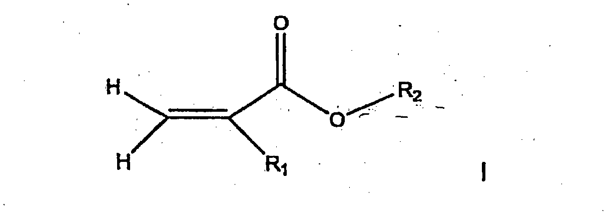 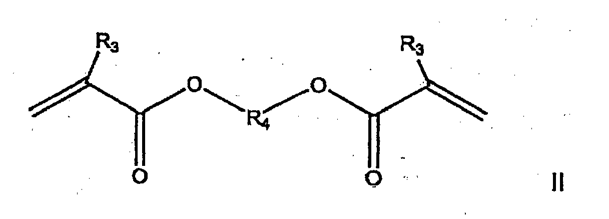 wherein:
R₁ is hydrogen or substituted or unsubstituted alkyl;
R₂ is a substituted or unsubstituted alkyl having more than 3 carbon atoms, cycloalkyl, cycloalkenyl, or substituted or unsubstituted aryl;
R₃ is hydrogen or substituted or unsubstituted alkyl; and
R₄ is a hydrocarbon moiety.

## Patentansprüche

1. Verfahren zur Bildung eines optischen Bands zur Datenspeicherung aus einer Substratfolie, wobei die Substratfolie eine erste Substratseite und eine zweite Substratseite aufweist, wobei das Verfahren Folgendes umfasst:
a) Strukturieren einer härtbaren flüssigen Zusammensetzung auf der zweiten Seite der Substratfolie, wobei die härtbare flüssige Zusammensetzung einen Radikalphotoinitiator und eine polymerisierbare Komponente, die mindestens ein Acrylat umfasst, umfasst;
b) Anstrahlen der härtbaren flüssigen Zusammensetzung zur Bildung einer strukturierten Prägungsschicht, die auf der Substratfolie angeordnet ist, wobei die Prägungsschicht eine erste Prägungsschichtseite und eine zweite Prägungsschichtseite aufweist, wobei die erste Prägungsschichtseite der zweiten Substratseite näher ist als die zweite Prägungsschichtseite; und
c) Aufbringen einer mehrschichtigen Datenaufzeichnungsanordnung auf der zweiten Prägungsschichtseite.

2. Verfahren nach Anspruch 1, wobei die härtbare flüssige Zusammensetzung ein Acrylat der Formel I enthält: 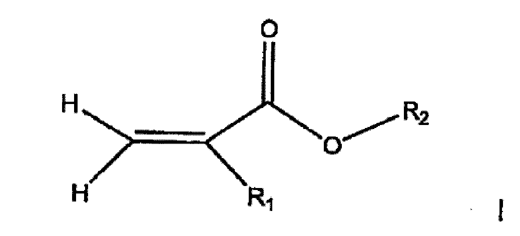 wobei R₁ für Wasserstoff oder substituiertes oder unsubstituiertes Alkyl steht und R₂ für substituiertes oder unsubstituiertes Alkyl mit mehr als 3 Kohlenstoffatomen, Cycloalkyl, Cycloalkenyl oder substituiertes oder unsubstituiertes Aryl steht.

3. Verfahren nach Anspruch 2, wobei R₁ für Wasserstoff oder Methyl steht.

4. Verfahren nach Anspruch 2, wobei R₂ für n-Butyl, t-Butyl, Isobornyl, Phenyl, Benzyl, Dicyclopentenyl, Dicyclopentenyloxyethyl, Ethylenglykoldicyclopentylether, Cyclohexyl und Naphthyl steht.

5. Verfahren nach Anspruch 1, wobei die härtbare flüssige Zusammensetzung eine Verbindung der folgenden Formel II enthält: 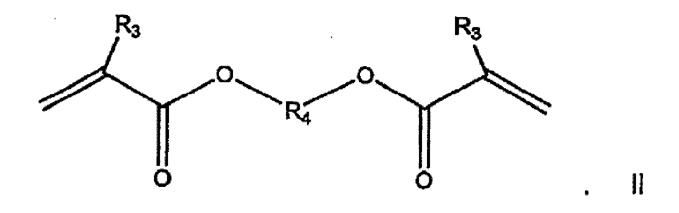 wobei R₃ für Wasserstoff oder substituiertes oder unsubstituiertes Alkyl steht und R₄ für eine Kohlenwasserstoffgruppierung steht.

6. Verfahren nach Anspruch 5, wobei R₃ für Wasserstoff oder Methyl steht.

7. Verfahren nach Anspruch 5, wobei R₄ für eine Alkylengruppe steht.

8. Verfahren nach Anspruch 1, wobei Schritt c) Folgendes umfasst:
d) Abscheiden einer Metallschicht auf der zweiten Prägungsschichtseite;
e) Abscheiden einer dielektrischen Schicht auf der Metallschicht;
f) Abscheiden einer Phasenwechselschicht auf der ersten dielektrischen Schicht; und
g) Abscheiden einer zweiten dielektrischen Schicht auf der Phasenwechselschicht.

9. Verfahren nach Anspruch 1, bei dem die Strukturierung der härtbaren flüssigen Zusammensetzung auf der zweiten Substratseite durch
Aufbringen der härtbaren flüssigen Zusammensetzung auf die zweite Substratseite zur Bildung eines beschichteten Substrats; und
Inberührungbringen der härtbaren flüssigen Zusammensetzung auf dem beschichteten Substrat mit einer Prägevorrichtung, so dass eine härtbare flüssige Zusammensetzung strukturiert wird; erfolgt.

10. Verfahren zur Bildung eines optischen Bands zur Datenspeicherung aus einer Substratfolie, wobei die Substratfolie eine erste Substratseite und eine zweite Substratseite aufweist, wobei das Verfahren Folgendes umfasst:
a) Strukturieren einer härtbaren flüssigen Zusammensetzung auf der zweiten Seite der Substratfolie durch:
Aufbringen der härtbaren flüssigen Zusammensetzung auf die zweite Substratseite zur Bildung eines beschichteten Substrats; und
Inberührungbringen der härtbaren flüssigen Zusammensetzung auf dem beschichteten Substrat mit einer Prägevorrichtung, so dass eine härtbare flüssige Zusammensetzung strukturiert wird;
wobei die härtbare flüssige Zusammensetzung einen Radikalphotoinitiator und eine polymerisierbare Komponente, die eine Verbindung der Formel I eine Verbindung der Formel II, umfasst: 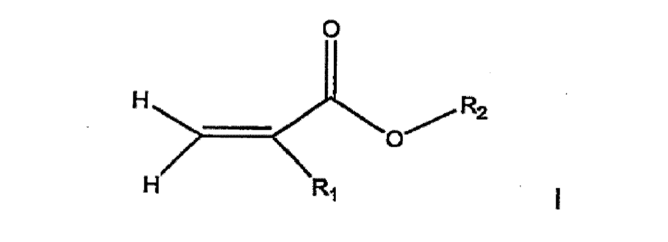 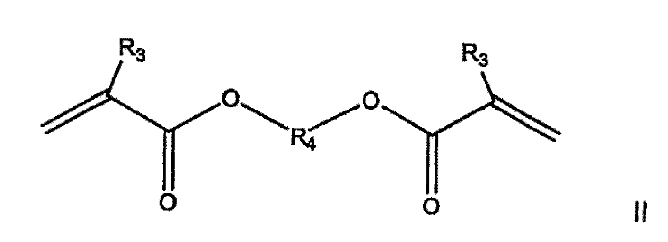
wobei:
R₁ für Wasserstoff oder substituiertes oder
unsubstituiertes Alkyl steht;
R₂ für substituiertes oder unsubstituiertes Alkyl mit mehr als 3 Kohlenstoffatomen, Cycloalkyl, Cycloalkenyl oder substituiertes oder
unsubstituiertes Aryl steht;
R₃ für Wasserstoff oder substituiertes oder
unsubstituiertes Alkyl steht und
R₄ für eine Kohlenwasserstoffgruppierung steht;
b) Anstrahlen der härtbaren flüssigen Zusammensetzung zur Bildung einer strukturierten Prägungsschicht, die auf der Substratfolie angeordnet ist, wobei die Prägungsschicht eine erste Prägungsschichtseite und eine zweite Prägungsschichtseite aufweist, wobei die erste Prägungsschichtseite der zweiten Substratseite näher ist als die zweite Prägungsschichtseite;
c) Aufbringen einer mehrschichtigen Datenaufzeichnungsanordnung auf der zweiten Prägungsschichtseite;
d) Abscheiden einer Metallschicht auf der zweiten Prägungsschichtseite;
e) Abscheiden einer dielektrischen Schicht auf der Metallschicht;
f) Abscheiden einer Phasenwechselschicht auf der ersten dielektrischen Schicht; und
g) Abscheiden einer zweiten dielektrischen Schicht auf der Phasenwechselschicht.

11. Verfahren nach Anspruch 10, wobei:
R₁ für Wasserstoff oder Methyl steht;
R₂ für Isobornyl, Phenyl, Benzyl, Dicyclopentenyl, Dicyclopentenyloxyethyl, Ethylenglykoldicyclopentylether, Cyclohexyl und Naphthyl steht;
R₃ für Wasserstoff oder Methyl steht; und
R₄ für eine Alkylengruppe steht.

12. Verfahren nach Anspruch 5 oder 10, wobei die härtbare flüssige Zusammensetzung eine Verbindung der folgenden Formel enthält:

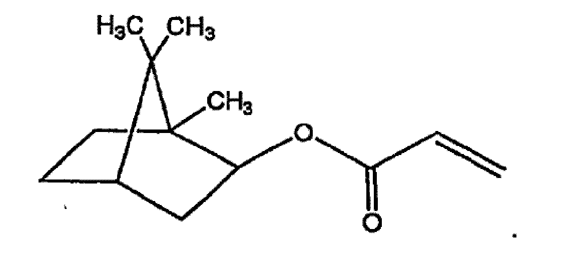

13. Verfahren nach Anspruch 5 oder 11, wobei R₄ durch -(CH₂)ₙ- beschrieben wird und n für eine ganze Zahl von 1 bis 10 steht.

14. Verfahren nach Anspruch 1 oder 10, wobei das mindestens eine Acrylat die folgende Formel aufweist:

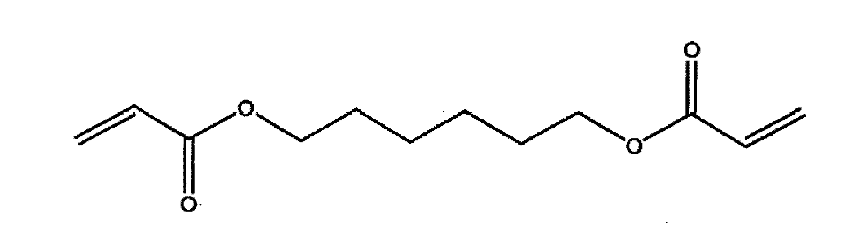

15. Optisches Band zur Datenspeicherung mit einem Substrat mit einer strukturierten polymeren Prägungsschicht, die Reste eines Radikalphotoinitiators und einer polymerisierbaren Komponente, die eine Verbindung der Formel I eine Verbindung der Formel II: 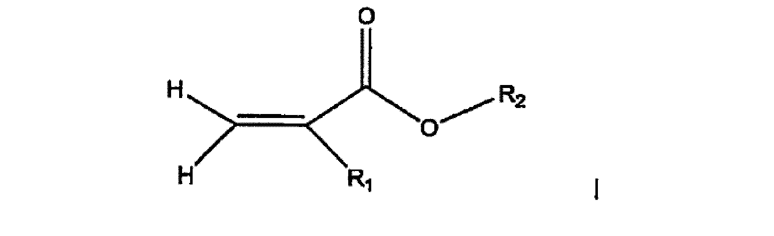 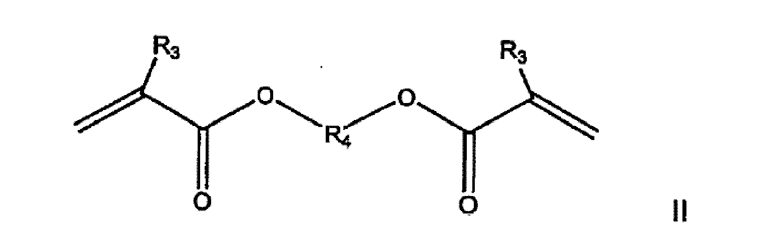 wobei:
R₁ für Wasserstoff oder substituiertes oder unsubstituiertes Alkyl steht;
R₂ für substituiertes oder unsubstituiertes Alkyl mit mehr als 3 Kohlenstoffatomen, Cycloalkyl, Cycloalkenyl oder substituiertes oder unsubstituiertes Aryl steht;
R₃ für Wasserstoff oder substituiertes oder unsubstituiertes Alkyl steht und
R₄ für eine Kohlenwasserstoffgruppierung steht;
enthält, enthält.

## Revendications

1. Procédé de formation d'une bande optique pour stockage de données à partir d'un film substrat, le film substrat ayant un premier côté de substrat et un deuxième côté de substrat, le procédé comprenant :
a) le modelage d'une composition liquide durcissable sur le deuxième côté du film substrat, la composition liquide durcissable comprenant un photoinitiateur radicalaire et un composant polymérisable comprenant au moins un acrylate ;
b) l'éclairage de la composition liquide durcissable pour former une couche d'empreinte modelée disposée sur le film substrat, la couche d'empreinte ayant un premier côté de couche d'empreinte et un deuxième côté de couche d'empreinte, le premier côté de couche d'empreinte étant plus proche du deuxième côté de substrat que le deuxième côté de couche d'empreinte ; et
c) le positionnement d'un ensemble d'enregistrement de données multicouche sur le deuxième côté de couche d'empreinte.

2. Procédé selon la revendication 1 dans lequel la composition liquide durcissable comporte un acrylate ayant la formule I : 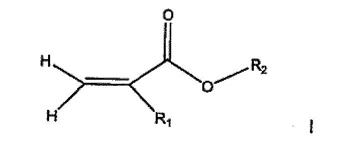 dans laquelle R₁ est un hydrogène ou un alkyle substitué ou non substitué ; et R₂ est un alkyle substitué ou non substitué ayant plus de 3 atomes de carbone, un cycloalkyle, un cycloalcényle, ou un aryle substitué ou non substitué.

3. Procédé selon la revendication 2 dans lequel R₁ est un hydrogène ou un méthyle.

4. Procédé selon la revendication 2 dans lequel R₂ est un groupe n-butyle, t-butyle, isobornyle, phényle, benzyle, dicyclopentényle, dicyclopentényloxyéthyle, éther dicyclopentylique d'éthylène glycol, cyclohexyle, et naphthyle.

5. Procédé selon la revendication 1 dans lequel la composition liquide durcissable comporte un composé ayant la formule II suivante : 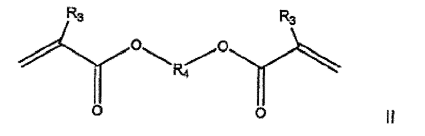 dans laquelle R₃ est un hydrogène ou un alkyle substitué ou non substitué et R₄ est une fraction hydrocarbonée.

6. Procédé selon la revendication 5 dans lequel R₃ est un hydrogène ou un méthyle.

7. Procédé selon la revendication 5 dans lequel R₄ est un groupe alkylène.

8. Procédé selon la revendication 1 dans lequel l'étape c) comprend
d) le dépôt d'une couche métallique sur le deuxième côté de couche d'empreinte ;
e) le dépôt d'une couche diélectrique sur la couche métallique ;
f) le dépôt d'une couche à changement de phase sur la première couche diélectrique ; et
g) le dépôt d'une deuxième couche diélectrique sur la couche à changement de phase.

9. Procédé selon la revendication 1 dans lequel la composition liquide durcissable est modelée sur le deuxième côté de substrat par :
application de la composition liquide durcissable au deuxième côté de substrat pour former un substrat revêtu ; et
mise en contact de la composition liquide durcissable sur le substrat revêtu avec un dispositif d'impression de telle sorte qu'une composition liquide durcissable est modelée.

10. Procédé de formation d'une bande optique pour stockage de données à partir d'un film substrat, le film substrat ayant un premier côté de substrat et un deuxième côté de substrat, le procédé comprenant :
a) le modelage d'une composition liquide durcissable sur le deuxième côté du film substrat par :
application de la composition liquide durcissable au deuxième côté de substrat pour former un substrat revêtu ; et
mise en contact de la composition liquide durcissable sur le substrat revêtu avec un dispositif d'impression de telle sorte que la composition liquide durcissable est modelée ;
la composition liquide durcissable comportant un photoinitiateur de radicaux libres et un composant polymérisable comportant un composé ayant la formule I et un composé ayant la formule II : 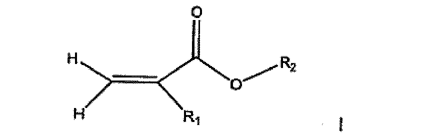 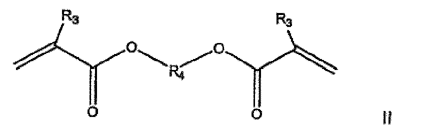
dans lesquelles :
R₁ est un hydrogène ou un alkyle substitué ou non substitué ;
R₂ est un alkyle substitué ou non substitué ayant plus de 3 atomes de carbone, un cycloalkyle, un cycloalcényle, ou un aryle substitué ou non substitué ;
R₃ est un hydrogène ou un alkyle substitué ou non substitué ; et
R₄ est une fraction hydrocarbonée ;
b) l'éclairage de la composition liquide durcissable pour former une couche d'empreinte modelée disposée sur le film substrat, la couche d'empreinte ayant un premier côté de couche d'empreinte et un deuxième côté de couche d'empreinte, le premier côté de couche d'empreinte étant plus proche du deuxième côté de substrat que le deuxième côté de couche d'empreinte ;
c) le positionnement d'un ensemble d'enregistrement de données multicouche sur le deuxième côté de couche d'empreinte ;
d) le dépôt d'une couche métallique sur le deuxième côté de couche d'empreinte ;
e) le dépôt d'une couche diélectrique sur la couche métallique ;
f) le dépôt d'une couche à changement de phase sur la première couche diélectrique ; et
g) le dépôt d'une deuxième couche diélectrique sur la couche à changement de phase.

11. Procédé selon la revendication 10 dans lequel :
R₁ est un hydrogène ou un méthyle ;
R₂ est un groupe isobornyle, phényle, benzyle, dicyclopentényle, dicyclopentényloxyéthyle, éther dicyclopentylique d'éthylène glycol, cyclohexyle, et naphthyle ;
R₃ est un hydrogène ou un méthyle ; et
R₄ est un groupe alkylène.

12. Procédé selon la revendication 5 ou 10 dans lequel la composition liquide durcissable comporte un composé ayant la formule suivante :

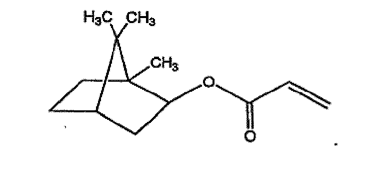

13. Procédé selon la revendication 5 ou 11 dans lequel R₄ est décrit par -(CH₂)ₙ- et n est un entier de 1 à 10.

14. Procédé selon la revendication 1 ou 10 dans lequel l'au moins un acrylate a la formule suivante :

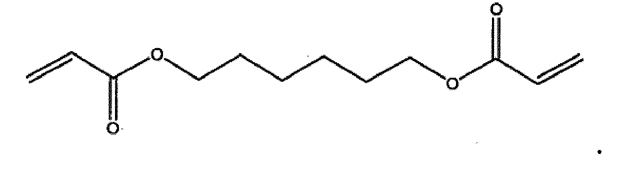

15. Bande optique pour stockage de données comprenant un substrat avec une couche d'empreinte polymère modelée comprenant des résidus d'un photoinitiateur de radicaux libres et un composant polymérisable comportant un composé ayant la formule I et un composé ayant la formule II : 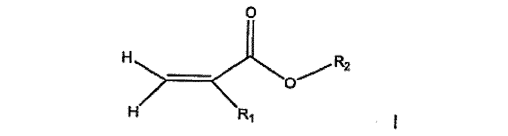 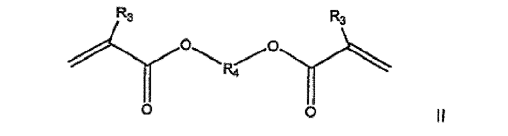 dans lesquelles :
R₁ est un hydrogène ou un alkyle substitué ou non substitué ;
R₂ est un alkyle substitué ou non substitué ayant plus de 3 atomes de carbone, un cycloalkyle, un cycloalcényle, ou un aryle substitué ou non substitué ;
R₃ est un hydrogène ou un alkyle substitué ou non substitué ; et
R₄ est une fraction hydrocarbonée.
